# EUROPÄISCHE PATENTSCHRIFT

(11) **EP 3 109 064 B1**
(45) Veröffentlichungstag und Bekanntmachung des Hinweises auf die Patenterteilung: **07.11.2018**
(21) Anmeldenummer: 16170788.0
(22) Anmeldetag: 23.05.2016
(51) Int. Cl.: B60C 1/00, C08F 236/06, C08F 293/00

(54) **VERFAHREN ZUR CO-POLYMERISATION, CO-POLYMER UND KAUTSCHUKMISCHUNG SOWIE DEREN VERWENDUNG**
METHOD FOR CO-POLYMERIZATION, CO-POLYMER AND RUBBER COMPOSITION AND THEIR USE
PROCEDE DE COPOLYMERISATION, MELANGE DE COPOLYMERE ET DE CAOUTCHOUC ET SON UTILISATION

(30) Priorität: 23.06.2015 DE 102015211563
(43) Veröffentlichungstag der Anmeldung: 28.12.2016
(73) Patentinhaber: Continental Reifen Deutschland GmbH, 30165 Hannover (DE)
(72) Erfinder: Herzog, Katharina, 31177 Harsum (DE); Müller, Lena, 31714 Lauenhagen (DE); Recker, Carla, 30167 Hannover (DE); Pruß, Noa, 60598 Frankfurt (DE); Conrad, Cathrin Sonja, 34346 Hannoversch Münden (DE); Vana, Phillipp, 37581 Bad Gandersheim (DE)
(74) Vertreter: Finger, Karsten

(56) Entgegenhaltungen:
- WO-A1-2010/083569
- DATABASE WPI Week 201472 Thomson Scientific, London, GB; AN 2014-T78176 XP002762596, & JP 2014 205137 A (DAIICHI KOGYO SEIYAKU CO LTD) 30. Oktober 2014 (2014-10-30)
- MASSIMO BENAGLIA ET AL: "Universal (Switchable) RAFT Agents", JOURNAL OF THE AMERICAN CHEMICAL SOCIETY, Bd. 131, Nr. 20, 27. Mai 2009 (2009-05-27) , Seiten 6914-6915, XP55032697, ISSN: 0002-7863, DOI: 10.1021/ja901955n
- DANIEL J. KEDDIE, CARLOS GUERRERO-SANCHEZ, GRAEME MOAD, ROGER J. MULDER, EZIO RIZZARDO, SAN H. THANG: "Chain transfer kinetics of acid/base swithchache N_Aryl-N-Pyridyl Dithiocarbamate RAFT Agents in methyl acrylate, N-vinylcarbazole and vinyl acetate polymerization", MACROMOLECULES, Bd. 45, 14. Mai 2012 (2012-05-14), Seiten 4205-4215, XP002762597, DOI: dx.doi.org/10.1021/ma300615g
- DANIEL J. KEDDIE, CARLOS GUERRERO-SANCHEZ, GRAEME MOAD, EZIO RIZZARDO, SAN H. THANG: "SWITCHABLE REVERSIBLE ADDITON - FRAGMENTATION CHAIN TRANSFER (RAFT) POLYMERIZATION IN AQUEOUS SOLUTION, N,N-DIMETHYLACRYLATE", MARCOMOLECULES, Bd. 44, 15. August 2011 (2011-08-15), Seiten 6738-6745, XP002762598, DOI: DX.DOI.ORG/10.1021/MA200760Q
- GRAEME MOAD, MASSIMO BENAGLIA, MING CHEN, JOHN CHIEFARI, YEN K. CHONG, DANIEL J. KEDDIE, EZIO RIUZZARDO AND SAN H. THANG: "Block Copolymer Synthesis through the use of switchable RAFT agents", ACS SYMPOSIUM SERIES, 20. Juni 2011 (2011-06-20), Seiten 81-102, XP002762599, DOI: 10.1021/bk-2011-1066.ch007

## Beschreibung

Die Erfindung betrifft ein Verfahren zur Co-Polymerisation von Dienen unter Verwendung wenigstens eines RAFT-Agens, ein Co-Polymer, welches durch das Verfahren hergestellt ist, eine schwefelvernetzbare Kautschukmischung sowie die Verwendung der schwefelvernetzbaren Kautschukmischung zur Herstellung von Fahrzeugluftreifen, Gurten, Riemen oder Schläuchen.

Der "Reversible Addition Fragmentation Chain Transfer"-Prozess (RAFT) ist eine vielversprechende Methode zur Durchführung kontrolliert radikalischer Polymerisationen, wie u.a. in der DE 69808622 T3 beschrieben ist.

Die Auswahl geeigneter Monomere für Polymere zur Anwendung in Fahrzeugreifen ist begrenzt, da aufgrund der Schwefelvernetzung bei der Vulkanisation von Reifenmischungen C=C-Doppelbindungen entlang der Polymerkette enthalten sein müssen. Geeignete Monomere sind insbesondere Diene wie Butadien und Isopren. Als weiteres Co-Monomer ist insbesondere Styrol bekannt.

Die WO 2010/083569 A1 offenbart die Polymerisation von ethylenisch ungesättigten Monomeren, wobei auch Monomere ausgewählt aus der Gruppe bestehend aus Alkenen, Vinylacetat, Acrylsäure-Derivaten und Methacrylsäure-Derivaten genannt werden. Beispielsweise werden in der WO 2010/083569 A1 die Herstellung von Polystyrol, Polystyrol-b-Polyvinylacetat sowie Polymethylmethacrylat, Polymethylmethacrylat-b-Polyvinylacetat und ähnlichen Polymere offenbart.

Die JP 2014205137 A offenbart Polymere von Methylmethacrylat, welche als Dispersionshilfsmittel für feste Partikel Anwendung finden, wie in Beschichtungen, Druckertinte usw.

Der Erfindung liegt daher nun auf Basis des Standes der Technik die Aufgabe zu Grunde, ein Verfahren zur Co-Polymerisation von Dienen bereitzustellen, mit dem ein neuartiges schwefelvernetzbares Co-Polymer hergestellt werden kann, mit dem in einer vulkanisierten Kautschukmischung eine Verbesserung der Eigenschaften, insbesondere der Wärmeaufbauindikatoren, insbesondere hinsichtlich der Anwendung in Fahrzeugreifen und damit insbesondere des Rollwiderstandsverhaltens, erzielt werden kann.

Gelöst wird diese Aufgabe erfindungsgemäß durch ein Verfahren zur Co-Polymerisation von wenigstens einem Monomer der Gruppe A) bestehend aus Dienen mit wenigstens einem Monomer der Gruppe B) ausgewählt aus der Gruppe bestehend aus Alkenen, Vinylacetat, Acrylsäure-Derivaten und Methacrylsäure-Derivaten unter Verwendung wenigstens eines schaltbaren RAFT-Agens aus der Gruppe der N-Methyl-N-(4-Pyridinyl)dithiocarbamate gemäß Formel I): 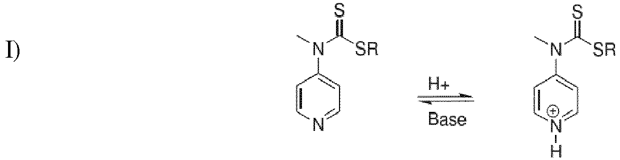
wobei R eine für RAFT-Polymerisation typische R-Gruppe ist, und wobei H⁺ für ein Proton steht, und wobei
durch Zugabe eines Protonendonors (Säure) die rechts abgebildete Form des Agens erhalten wird und durch Zugabe eines Protonenakzeptors (Base) die linke Form des Agens erhalten wird.

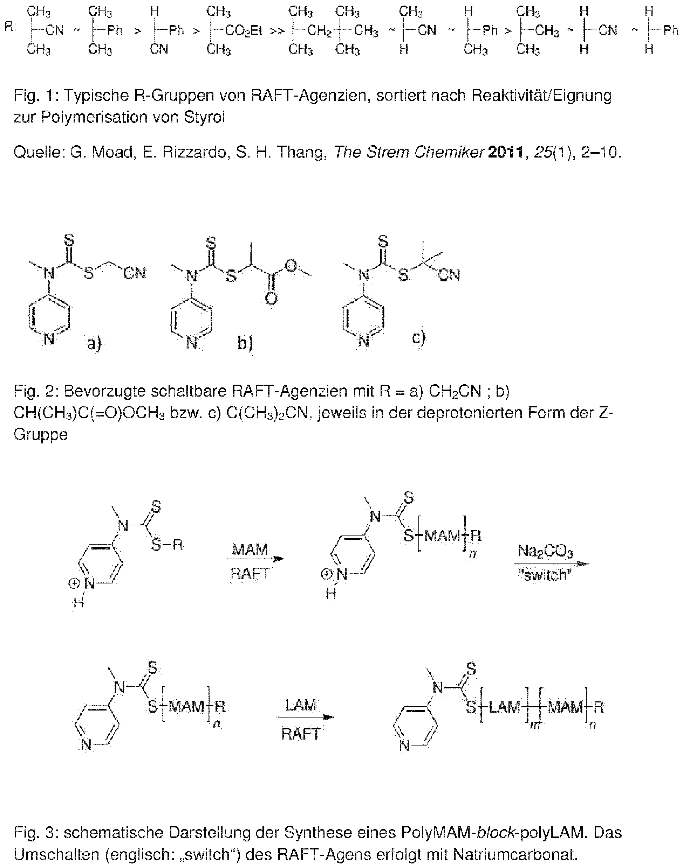

Typische R-Gruppen beinhalten z.B. die in Fig. 1 abgebildeten chemischen Gruppen, sind aber nicht auf diese beschränkt. Weitere mögliche R-Gruppen sind beispielsweise CH₂CN und CH(CH₃)C(=O)OCH₃. In Fig. 1 bedeutet Ph = Phenyl, Me = Methyl, Et = Ethyl. Die sonstigen Buchstaben stellen die jeweiligen Symbole der chemischen Elemente dar.

Die R-Gruppen können neben den beispielhaft in Fig. 1 bzw. den genannten aufgeführten Gruppen zusätzliche Molekülteile, die als sogenannte Spacer fungieren, aufweisen. Spacer dienen als eine Art "Abstandshalter" und sind bevorzugt Alkylgruppen oder Alkanoylgruppen mit 1 bis 10, bevorzugt 3 bis 10 Kohlenstoffatomen.

Bevorzugt ist die R-Gruppe ausgewählt aus der Gruppe enthaltend a) CH₂CN und/oder b) CH(CH₃)C(=O)OCH₃ und/oder c) C(CH₃)₂CN.

Gemäß einer bevorzugten Ausführungsform der Erfindung ist die R-Gruppe ausgewählt aus der Gruppe bestehend aus a) CH₂CN und/oder b) CH(CH₃)C(=O)OCH₃ und/oder c) C(CH₃)₂CN.

Hiermit ergeben sich die in Fig. 2 abgebildeten RAFT-Agenzien.

Die Synthese und die Eigenschaften dieser Agenzien sind in der Literatur beschrieben:
G. Moad, M. Benaglia, M. Chen, J. Chiefari, Y. K. Chong, D. J. Keddie, E. Rizzardo, S. H. Thang, ACS Symp. Ser. 2011, 1066, 81-102;
M. Benaglia, J. Chiefari, Y. K. Chong, G. Moad, E. Rizzardo, S. H. Thang, J. Am. Chem. Soc. 2009, 131(20), 6914-6915;
M. Benaglia, M. Chen, Y. K. Chong, G. Moad, E. Rizzardo, S. H. Thang, Macromolecules 2009, 42(24), 9384-9386;
G. Moad, D. Keddie, C. Guerrero-Sanchez, E. Rizzardo, S. H. Thang, Macromol. Symp. 2015, 350, 34-42.

Der typische Aufbau eines RAFT-Agens ist: Z-C(=S)-S-R. Im Rahmen der vorliegenden Erfindung handelt es sich bei der Gruppe Z demnach um die Gruppe N-Methyl-N-(4-Pyridinyl) gemäß Formel IIa) in der deprotonierten Form bzw. in der protonierten Form IIb):

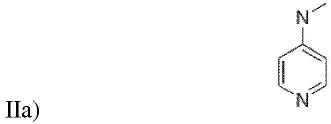

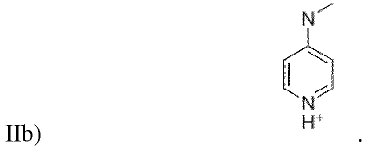

Da je nach Zugabe eines Protonendonors (Säure) oder eines Protonenakzeptors (Base) die Form IIa) oder Form IIb) des Agens erhalten wird, wird das Agens auch als "schaltbares RAFT-Agens" (*engl.* "switchable RAFT agent") bezeichnet.

Bei der Säure, also dem Protonendonor, kann es sich prinzipiell um jeden dem Fachmann bekannten Protonendonor handeln. Geeignete und bevorzugte Säuren sind beispielsweise *para*-Toluolsulfonsäure (*p*-TsOH) und/oder Trifluormethansulfonsäure (TfOH) und/oder Trifluorethansäure und/oder Chlorethansäure und/oder Ethansäure, besonders bevorzugt sind *para*-Toluolsulfonsäure (*p*-TsOH) und/oder Trifluormethansulfonsäure (TfOH). Bevorzugt erfolgt die Zugabe der Säuren in stöchiometrischen Mengen.

Bei der Base, also dem Protonenakzeptor, kann es sich prinzipiell um jeden dem Fachmann bekannten Protonenakzeptor handeln. Geeignete und bevorzugte Basen sind beispielsweise Natriumcarbonat (Na₂CO₃) oder 4-(Dimethylamino)-pyridin (DMAP). Im Falle von Na₂CO₃ erfolgt bevorzugt eine Filtration durch Na₂CO₃. Bei der Verwendung von DMAP als Base und anderen vergleichbaren im Reaktionsmedium löslichen Basen werden diese bevorzugt in stöchiometrischen Mengen zugegeben. Basen, die im Reaktionsmedium nicht oder nur schwer löslich sind, wie Natriumcarbonat (Na₂CO₃), können prinzipiell ebenfalls in stöchiometrischen Mengen zugegeben werden.
Der Einfachheit halber wird auch im Falle der Filtration durch z.B. Na₂CO₃ von der "Zugabe" gesprochen.

Das RAFT-Agens mit der protonierten Form der Z-Gruppe ist vergleichsweise reaktiv und selektiv gegenüber Monomeren, dessen Doppelbindung mit einer anderen Doppelbindung konjugiert ist, wie bei Dienen (Monomere der Gruppe A), wie Butadien und/oder Isopren, oder dessen Doppelbindung in einem aromatischen Ring konjugiert ist, wie bei vinylaromatischen Verbindungen, wie Styrol, oder dessen Doppelbindung in einer Carbonylgruppe konjugiert ist, wie bei Acrylsäure-Derivaten oder Methacrylsäure-Derivaten, wie Methacrylsäuremethylester (MMA). Derartige Monomere werden auch als "MAM" bezeichnet, was für "more activated monomers" steht.
Das RAFT-Agens mit der unprotonierten Form der Z-Gruppe ist vergleichsweise reaktiv und selektiv gegenüber Monomeren wie Alkenen, wie insbesondere Ethen, oder Monomeren die ein freies Elektronenpaar eines Heteroatoms wie insbesondere von Sauerstoff oder Stickstoff gleich neben der Doppelbindung haben, wie Vinylacetat. Derartige Monomere werden auch als "LAM" bezeichnet, was für "less activated monomers" steht.
Diese Einteilung in MAM und LAM Typen basiert auf den unterschiedlichen elektronischen Eigenschaften der Monomere. MAM-Typen passen aufgrund ihrer elektronischen Struktur besser zu der protonierten und damit geladenen Spezies eines schaltbaren RAFT-Agens und lassen sich somit durch diese bevorzugt kontrolliert polymerisieren. LAM-Typen passen aufgrund ihrer elektronischen Struktur besser zu der deprotonierten und damit ungeladenen Spezies eines schaltbaren RAFT-Agens und lassen sich somit durch diese bevorzugt kontrolliert polymerisieren.

Die Einteilung in Gruppe A und Gruppe B Monomere ist im Rahmen der vorliegenden Anmeldung nicht die gleiche wie in MAM und LAM, da z.B. die Monomere der Gruppe B Acrylsäure-Derivate und/ oder Methacrylsäure-Derivate als Co-Monomere für das wenigstens eine Dien (Gruppe A) bevorzugt durch die protonierte Form des RAFT-Agens polymerisiert werden und somit als MAM eingestuft werden.

Gemäß einer beispielhaften und bevorzugten Ausführungsform des erfindungsgemäßen Verfahrens erfolgt in der zeitlichen Abfolge zunächst eine Polymerisation von wenigstens einem Dien (Monomer der Gruppe A), bevorzugt Butadien und/oder Isopren, unter Verwendung der protonierten Form (der Z-Gruppe) des RAFT-Agens und danach an das hergestellte Polymer, welches das RAFT-Agens weiterhin trägt, die Polymerisation von wenigstens einem Monomer aus der Gruppe B, insbesondere Ethen und/oder Vinylacetat, unter Verwendung der unprotonierten Form (der Z-Gruppe) des RAFT-Agens.
Es ist aber auch denkbar, dass zunächst wenigstens ein Monomer des Typs LAM, wie Ethen oder Vinylacetat, mittels der deprotonierten Form des RAFT-Agens gemäß Formel I) polymerisiert wird und das resultierende Makro-RAFT-Agens anschließend mit einem Dien umgesetzt wird, um entsprechende Block-Co-Polymere zu erhalten.
Ferner können auch mehrere Polymerisationsschritte mit dem protonierten und deprotonierten Agens abwechselnd nacheinander erfolgen.

Somit werden bei dem erfindungsgemäßen Verfahren durch die zeitlich nacheinander erfolgende Verwendung des schaltbaren RAFT-Agens in beiden genannten Formen (protoniert und deprotoniert) Block-Co-Polymere mit definierter Reihenfolge der Blöcke erhalten.
In einem letzten Verfahrensschritt kann bevorzugt die Abspaltung des verwendeten RAFT-Agens erfolgen. Dies ist jedoch nicht zwingend notwendig. Das Agens kann auch an der hergestellten Polymerkette verbleiben.

Ein beispielhaftes Schema ist in Fig. 3 dargestellt.

Bei dem erfindungsgemäßen Verfahren erfolgt eine Co-Polymerisation von wenigstens einem Monomer der Gruppe A) bestehend aus Dienen mit wenigstens einem Monomer der Gruppe B) ausgewählt aus der Gruppe bestehend aus Alkenen, Vinylacetat, Acrylsäure-Derivaten und Methacrylsäure-Derivaten.

Im Rahmen der vorliegenden Erfindung werden unter Dienen gemäß Römpp Online ungesättigte aliphatische und cycloaliphatische Kohlenwasserstoffe, die im Molekül zwei Doppelbindungen enthalten, verstanden. Bevorzugt sind die beiden Doppelbindungen konjugiert. Bevorzugt ist das konjugierte Dien ausgewählt aus der Gruppe enthaltend, besonders bevorzugt bestehend aus,
1,3-Butadien (Butadien) und/oder 2-Methylbuta-1,3-dien (Isopren = 2-(C₁-C₅-Alkyl)-1,3-Butadien) und/oder 2,3-Dimethyl-1,3-Butadien und/oder 1,3-Pentadien und/oder 2,4-Hexadien und/oder 1,3-Hexadien und/oder 1,3-Heptadien und/oder 1,3-Octadien und/oder 2-Methyl-2,4-Pentadien und/oder Cyclopentadien und/oder 2,4-Hexadien und/oder 1,3-Cyclooctadien und/oder 2-Chlor-1,3-butadien (Chloropren). Besonders bevorzugte Diene sind hierbei Isopren, Butadien und Chloropren.

Ganz besonders bevorzugt ist das Dien ausgewählt aus der Gruppe bestehend aus 1,3-Butadien und 2-Methylbuta-1,3-dien (Isopren).

Alkene, die als Monomere der Gruppe B an der Polymerisation beteiligt sein können, sind aliphatische Verbindungen mit einer Doppelbindung, wie insbesondere Ethen, Propen, Buten, Penten, Hexen.
Bevorzugt ist das Alken ausgewählt aus der Gruppe bestehend aus Ethen, Buten und Hexen. Besonders bevorzugt ist das Alken Ethen und/oder Buten, womit auch ein Gemisch aus den beiden denkbar ist. Gemäß eine besonders bevorzugten Ausführungsform der Erfindung ist das Alken Ethen.

Weitere Monomere der Gruppe B sind erfindungsgemäß Vinylacetat, Acrylsäure-Derivate und Methacrylsäure-Derivate.
Vinylacetat hat die Strukturformel CH₃C(=O)OC(H)=CH₂.
Durch die Verwendung von Vinylacetat als Co-Monomer sind Polydienvinylalkohole zugänglich, die dann aus dem Polydien-Polyvinylacetat-Co-Polymer durch Hydrolyse erhalten werden können.

Unter "Acrylsäure-Derivat" werden im Rahmen der vorliegenden Erfindung Verbindungen verstanden, die sich von Acrylsäure ableiten lassen und durch Reaktion der Carbonsäure-Funktionalität daraus entstanden sind, wie beispielsweise und insbesondere aus Acrylsäure entstandene Ester und/oder Amide und/oder das Nitril und/oder Salze der Acrylsäure, bevorzugt sind Ester und/oder Amide.
Bei den Acrylsäure-Derivaten kann es sich beispielsweise und insbesondere um Acrylsäuremethylester, Acrylsäureethylester, Acrylsäurebutylester, Acrylsäureisobutylester und Acrylsäure-2-ethylhexylester oder N,N-dimethylacrylamid, N-isopropylacrylamid, N-tert-butylacrylamid und N-(2-Hydroxylpropyl)methacrylamid handeln.
Unter "Methacrylsäure-Derivat" werden im Rahmen der vorliegenden Erfindung Verbindungen verstanden, die sich von Methacrylsäure ableiten lassen und durch Reaktion der Carbonsäure-Funktionalität daraus entstanden sind, wie beispielsweise und insbesondere aus Methacrylsäure entstandene Ester und/oder Amide und/oder das Nitril und/oder Salze der Methacrylsäure, bevorzugt sind Ester und/oder Amide.

Bei den Methacrylsäure-Derivaten kann es sich beispielsweise und insbesondere um Methacrylsäuremethylester (MMA) handeln.

Bei der Herstellung eines Co-Polymers aus wenigstens einem Dien und wenigstens einem Acrylsäure-Derivat und/oder Methacrylsäure-Derivat erfolgen die Polymerisationsschritte aufgrund der oben beschriebenen Reaktivitäten und elektronischen Strukturen jeweils bevorzugt mit der protonierten Form des RAFT-Agens.
Es sind aber auch Verfahren denkbar, bei denen z.B. ein Methacrylsäure-Derivat, optional zusammen mit Vinylacetat, mit der deprotonierten Form des RAFT-Agens polymerisiert wird.

Wenn zwei Monomere unterschiedlicher Reaktivitäten gleichzeitig vorhanden sind, wird zunächst das reaktivere bevorzugt eingebaut und es bildet sich im Verlauf der gebildeten Polymerkette ein Gradient aus bis zum Schluss ggf. ein Block des weniger reaktiven Monomers an der Polymerkette entsteht.

Bevorzugt ist das wenigstens eine Monomer der Gruppe B ausgewählt aus der Gruppe bestehend aus Ethen und/oder Vinylacetat.

Somit sind durch das erfindungsgemäße Verfahren neuartige schwefelvernetzbare Co-Polymere, insbesondere für die Verwendung in Kautschukmischungen von Fahrzeugreifen, herstellbar, die in Kombination mit den schwefelvernetzbaren Dienen bisher unübliche Monomere enthalten, wie insbesondere Ethen und/oder Vinylacetat.
Hierdurch ergeben sich neuartige und durch die gezielte schaltbare Block-Co-Polymerisation Co-Polymere mit gezielt einstellbarer Struktur, sodass gezielt Eigenschaften, wie insbesondere das Rollwiderstandsverhalten der damit hergestellten Kautschukmischungen von Fahrzeugreifen, optimiert werden können.

Ein weiterer Gegenstand der vorliegenden Erfindung besteht in einem Co-Polymer, welches durch das oben beschriebene erfindungsgemäße Verfahren hergestellt ist.

Weiterhin ist es denkbar, dass das hergestellte Co-Polymer neben den Monomeren der Gruppe A (wenigstens ein Dien) und der Gruppe B weitere Monomere enthält, wie beispielsweise eine vinylaromatische Verbindung.

Der Begriff "vinylaromatische Verbindung" umfasst im Rahmen der vorliegenden Erfindung monovinylaromatische Verbindungen, d.h. Verbindungen, bei denen nur eine Vinylgruppe an eine aromatische Gruppe gebunden ist, sowie vinylaromatische Verbindungen, bei denen zwei oder mehr Vinylgruppen an eine aromatische Gruppe gebunden sind.
Als vinylaromatische Verbindung ist jede dem Fachmann bekannte denkbar. Bevorzugt ist die vinylaromatische Verbindung ausgewählt aus der Gruppe enthaltend,
besonders bevorzugt bestehend aus,
Styrol und/oder C₁₋₄-Alkylsubstituierte Styrole und/oder Stilben und/oder Vinylbenzyldimethylamin und/oder (4-Vinylbenzyl)Dimethylaminoethylether und/oder N,N-Dimethylaminoetyhlstyrol und/oder tert-Butoxystyrol und/oder Vinylpyridin und/oder divinylaromatische Verbindungen.
Bei den C₁₋₄-Alkylsubstituierten Styrolen kann es sich beispielsweise um 2-Methylstyrol und/oder 3-Methylstyrol und/oder 4-Methylstyrol und/oder 2,4-Dimethylstyrol und/oder 2,4,6-Trimethylstyrol und/oder alpha-Methylstyrol und/oder 2,4-Diisopropylstyrol und/oder 4-tert-Butylstyrol handeln.
Der Begriff "C₁₋₄-Alkylsubstituiert" bedeutet hierbei, dass ein Alkyl-Rest mit 1 bis 4 Kohlenstoffatomen als Substituent eines Wasserstoffatoms vorhanden ist.
Bei den divinylaromatische Verbindungen kann es sich beispielsweise um 1,2-Divinylbenzol und/oder 1,3-Divinylbenzol und/oder 1,4-Divinylbenzol handeln.

Somit kann das erfindungsgemäße Co-Polymer z.B. ein Co-Polymer aus Styrol und Butadien und Vinylacetat sein.
Die Polymerisation erfolgt dann bevorzugt durch zunächst eine Co-Polymerisation von Styrol und Butadien unter Verwendung der protonierten Form des RAFT-Agens und anschließend einer Polymerisation von Vinylacetat an das im ersten Schritt hergestellte Styrol-Butadien-Copolymer. Styrol zählt eben falls zu den Monomeren des Typs MAM.

Auch diese Ausführungsformen sind in dem oben beschriebenen erfindungsgemäßen Verfahren umfasst.
Bei dem erfindungsgemäßen Verfahren zur Co-Polymerisation und dem erfindungsgemäßen Co-Polymer sind grundsätzlich auch Ausführungsformen mit drei oder mehreren verschiedenen Monomeren umfasst. Beispielsweise kann es sich neben dem genannten Beispiel aus Styrol, Butadien und Vinylacetat auch um ein Terpolymer aus Isopren, Butadien und Ethen handeln.

Bevorzugte beispielhafte erfindungsgemäße Co-Polymere sind mit den oben genannten Monomeren daher:
Poly(butadien)-block-poly(vinylacetat), Poly(butadien)-block-poly(ethylen), Poly(butadien)-block-poly(acrylsäureester), Poly(butadien)-block-poly(acrylsäureestervinylacetat), Poly(butadien)-block-poly(acrylsäureester-ethylen), Poly(styrol-butadien)-block-poly(vinylacetat), Poly(styrol-butadien)-block-poly(ethylen), Poly(styrol-butadien)-block-poly(acrylsäureester), Poly(styrol-butadien)-block-poly(acrylsäureester-vinylacetat), Poly(styrol-butadien)-block-poly(acrylsäureester-ethylen), Poly(isopren)-block-poly(vinylacetat), Poly(isopren)-block-poly(ethylen), Poly(isopren)-block-poly(acrylsäureester), Poly(isopren)-block-poly(acrylsäureester-vinylacetat) und Poly(isopren)-block-poly(acrylsäureester-ethylen).
Ferner gehören die entsprechenden Block-Co-Polymere enthaltend weitere Acrylsäure-Derivate und/oder Methacrylsäure-Derivate, wie Acrylsäureamide und/oder Methacrylsäureamide, als Monomere zu den erfindungsgemäßen Co-Polymeren.
Der Ausdruck "block" in den genannten Co-Polymerbezeichnungen gibt an, dass jeweils Blöcke der Monomere bzw. Monomer-Gruppen vorliegen. Hierbei enthält ein Block bevorzugt 3 oder mehr Monomere, besonders bevorzugt 5 oder mehr Monomere, einer Art.

Das Verfahren zur Co-Polymerisation unter Verwendung wenigstens eines oben beschriebenen schaltbaren RAFT-Agens ist im Folgenden anhand des Beispiels der Polymerisation von Butadien gefolgt von Vinylacetat beschrieben:
Das Verfahren ist nicht auf Butadien und Vinylacetat beschränkt, sondern kann erfindungsgemäß zur Herstellung aller Co-Polymere aus den oben beschriebenen Monomeren verwendet werden, inkl. zur Herstellung von Copolymeren aus drei oder mehr verschiedenen Monomeren.

### Beispiel 1

Zunächst erfolgte eine Polymerisation von Butadien unter Verwendung der protononierten Form des RAFT-Agens gemäß Formel I) mit R gleich C(CH₃)₂CN (Variante c) in Fig. 2). Da die Polymerisation aufgrund des (gasförmigen) Aggregatzustandes von Butadien nicht in Substanz durchgeführt werden kann, wurde als Lösungsmittel Toluol verwendet, trotz der geringen Löslichkeit von *para*-Toluolsulfonsäure in Toluol. Toluol löst das Monomer Butadien sehr gut und hat einen vergleichsweise hohen Siedepunkt von 111 °C. Wird die Polymerisation bei 80 °C durchgeführt, ist Toluol noch flüssig. Auf der anderen Seite ist der Dampfdruck
hoch genug, dass es auch in großen Mengen gut von der Polymerprobe abdampft.
Bei diesem Schritt wurden
35,4 Mol.-% Butadien,
0,078 Mol.-% des RAFT-Agens,
0,016 Mol.-% 1,1'-Azobis(cyclohexancarbonitril) (ACCN) als Initiator und
64,4 Mol.-% Toluol
Sowie 0,078 Mol-% *para*-Toluolsulfonsäure zum Protonieren
verwendet. Die Polymerisation erfolgte bei 80 °C über 48 Stunden. Es wurde ein RAFTpolymerisiertes Polybutadien hergestellt, welches ein Mn von 1480 g/mol und eine Polydispersität von 2,39 aufweist. Der Umsatz betrug 6,1 %.
Das Zahlenmittel der Molmasse (bzw. der Molmassenverteilung) Mn wurde gemäß GPC (s. unten) bestimmt.
Das RAFT-Agens selbst ist noch an der Polybutadien-Kette enthalten, sodass das Produkt dieser ersten Polymerisation auch als Polybutadien-Makro-RAFT-Agens bezeichnet wird.

Für die Bestimmung der Molmasse bzw. der Molmassenverteilung mittels GPC gelten im Rahmen der vorliegenden Erfindung folgende Messbedingungen: SEC Analysis Systems 1260 Infinity von PSS Agilent mit: PSS Agilent Technologies 1260 Iso Pump G1310B (HPLC-Pumpe), einem Agilent 1260 ALS G1329B Autosampler, einem Agilent 1260 ALS Injektor, einer Vorsäule (PSS SDV, 8 x 50 mm, Partikelgröße 5 µm), drei Trennsäulen (PSS SDV, 8 x 300 mm, Partikelgröße: 5 µm, Porengröße 10⁵ (zehn hoch fünf) Å, 10³ (zehn hoch drei) Å und 10² (zehn hoch zwei) Å) und den Detektoren; UV-Detektor PSS Agilent Technologies 1260 VWDVL bei einer Wellenlänge von 310 nm sowie der RI-Detektor PSS Agilent Technologies 1260 RID benutzt; Laufmittel THF (HPLC-grade) mit Toluol (> 99,7 %, trocken) als interner Standard (Fließgeschwindigkeit 1,0 mL/min bei 35 °C). Das System wird mit Polystyrol-Standards mit niedriger Polydispersität von PSS kalibriert. Zur Auswertung wird die Software PSS WinGPC verwendet. Die detektierten Intensitäten werden auf 1 normiert und, sofern nicht anders angegeben, das Signal des RI-Detektors dargestellt.

Das hergestellte Polybutadien-Makro-RAFT-Agens (bzw. die Z-Gruppe wie oben beschrieben) wurde nun zunächst durch Filtration durch Na₂CO₃ deprotoniert.
Das deprotonierte Polybutadien-Makro-RAFT-Agens (10 mmol) wurde mit Vinylacetat bei 70 °C in Substanz (d.h. in diesem Beispiel ohne zusätzliches Lösungsmittel) umgesetzt. Als Initiator dienten 5,65 mmol 2,2'-Azo-bis(isobutyronitril) (AIBN).

Das Zahlenmittel der Molmasse (bzw. der Molmassenverteilung) Mn und die Polydispersität (Mw/Mn) sowie der Umsatz U mit zunehmender Reaktionszeit t sind in Tabelle 1 aufgeführt.
Hierbei ist Mw das Gewichtsmittel der Molmasse (bzw. der Molmassenverteilung).

**Tabelle 1**

| t (h) | Mn (g/mol) | Mw/Mn | U (%) |
|---|---|---|---|
| 1 | 4030 | 1,67 | 2,6 |
| 2 | 4780 | 1,8 | 3,6 |
| 3 | 6170 | 1,86 | 4,7 |
| 4 | 7400 | 1,86 | 6,5 |
| 6 | 10950 | 1,86 | 10,9 |
| 8 | 17130 | 1,93 | 18,0 |
| 12 | 31080 | 2,82 | 32,4 |
| 14 | 33970 | 3,06 | 37,2 |
| 16 | 38950 | 2,97 | 41,9 |

Somit wurde erstmals ein Poly(butadien)-*block*-poly(vinylacetat) mittels RAFT hergestellt. Ein derartiges erfindungsgemäßes Co-Polymer kann anschließend in einem weiteren erfindungsgemäßen Verfahrensschritt hydrolysiert werden, sodass als ein weiteres erfindungsgemäßes Co-Polymer ein Poly(butadien)-*block*-poly(vinylalkohol) erhalten wird.

Weiterhin kann beispielhaft ein schaltbares RAFT-Agens gemäß Formel I) mit
R gleich CH(CH₃)C(=O)OCH₃ (Variante b) in Fig. 2) verwendet werden, und zwar z.B. zunächst in der protonierten Form zur Polymerisation von Butadien und anschließend nach der Deprotonierung des Polybutadien-Makro-RAFT-Agens einer Polymerisation von Vinylacetat und/oder Ethen an die Polybutadienkette.

Ein Gegenstand der vorliegenden Erfindung besteht wie oben bereits aufgeführt in einem Co-Polymer, welches durch das erfindungsgemäße Verfahren hergestellt ist. Beispielweise handelt es sich um ein Co-Polymer, welches, wie oben beispielhaft unter Beispiel 1 oder anderen beispielhaften Ausführungsformen beschrieben, hergestellt wurde. Das erfindungsgemäße Co-Polymer ist jedoch nicht auf diese Beispiele unter diesen beispielhaften Versuchsbedingungen beschränkt.

Bei dem erfindungsgemäßen Polymer kann es sich zudem auch um ein Co-Polymer aus drei oder mehr verschiedenen Monomeren handeln.

Das Mw bzw. Mn der erfindungsgemäßen Co-Polymere ist nicht auf die oben genannten Beispiele beschränkt. Je nach Reaktionsführung, insbesondere je nach Dauer der Polymerisationsschritte, können Co-Polymere mit einem Mn von 200 bis z.B. 2000000 g/mol hergestellt werden.

Ein weiterer Gegenstand der vorliegenden Erfindung besteht in einer schwefelvernetzbaren Kautschukmischung, die wenigstens eines der hergestellten Co-Polymere enthält.
Die erfindungsgemäße schwefelvernetzbare Kautschukmischung enthält wenigstens eines der hergestellten Co-Polymere und kann zudem zusätzlich wenigstens einen im Stand der Technik bekannten Dienkautschuk enthalten.
Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.
Bei dem wenigstens einen Dienkautschuk handelt es sich um natürliches Polyisopren und/oder synthetisches Polyisopren und/oder Polybutadien (Butadien-Kautschuk) und/oder unfunktionalisiertes Styrol-Butadien-Copolymer (Styrol-Butadien-Kautschuk) und/oder epoxidiertes Polyisopren und/oder Styrol-Isopren-Kautschuk und/oder HalobutylKautschuk und/oder Polynorbornen und/oder Isopren-Isobutylen-Copolymer und/oder Ethylen-Propylen-Dien-Kautschuk und/oder Nitril-Kautschuk und/oder ChloroprenKautschuk und/oder Acrylat-Kautschuk und/oder Fluor-Kautschuk und/oder SilikonKautschuk und/oder Polysulfid-Kautschuk und/oder Epichlorhydrin-Kautschuk und/oder Styrol-Isopren-Butadien-Terpolymer und/oder hydrierten Acrylnitrilbutadien-Kautschuk und/oder hydrierten Styrol-Butadien-Kautschuk und/oder Butadien-Isopren-Kautschuk. Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz.

Das oder die eingesetzte(n) Polybutadiene und/oder Styrol-Butadien-Copolymere kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen und/oder Alkoxysilan-Gruppe und einem primären Amin und/oder einer Alkoxysilan-Gruppe und einem Thiol handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Die Begriffe "vulkanisiert" und "vernetzt" werden im Rahmen der vorliegenden Erfindung synonym verwendet.

Die erfindungsgemäße Kautschukmischung enthält ferner bevorzugt wenigstens einen Füllstoff wie Kieselsäure, Ruß sowie ggf. weitere bekannte polare und/oder unpolare Füllstoffe, wie Alumosilicate, Kreide, Kaolin, Stärke, Magnesiumoxid, Titandioxid und/oder Kautschukgele und/oder Fasern (wie zum Beispiel Aramidfasern, Glasfasern, Carbonfasern, Cellulosefasern), sowie Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und CarbonylGruppen) und/oder Graphit und/oder Graphene und/oder sogenannte "carbon-silica dualphase filler".
Handelt es sich bei dem Füllstoff um wenigstens eine Kieselsäure, so enthält die Kautschukmischung bevorzugt 1 bis 300 phr, besonders bevorzugt 1 bis 200 phr, ganz besonders bevorzugt 1 bis150 phr, wenigstens einer Kieselsäure.
Handelt es sich bei dem Füllstoff um wenigstens einen Ruß, so enthält die Kautschukmischung bevorzugt 1 bis 200 phr, besonders bevorzugt 1 bis 170 phr und ganz besonders bevorzugt 1 bis 100 phr wenigstens eines Rußes.
Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 60 bis 260 m²/g, besonders bevorzugt von 120 bis 230 m²/g, und eine CTAB-Oberfläche (gemäß ASTM D 3765) von 30 bis 400 m²/g, bevorzugt von 60 bis 250 m²/g, besonders bevorzugt von 120 bis 230 m²/g, aufweist.
Enthält die Kautschukmischung Ruß, sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist.

Die erfindungsgemäße Kautschukmischung kann auch ein Gemisch zweier oder mehrerer der genannten Füllstoffe enthalten.

Zinkoxid gehört im Rahmen der vorliegenden Erfindung nicht zu den Füllstoffen, ist aber bevorzugt in Kombination mit Stearinsäure in der erfindungsgemäßen Kautschukmischung enthalten.
Weiterhin enthält die Kautschukmischung bevorzugt noch weitere Zusatzstoffe.
Weitere Zusatzstoffe beinhaltet im Wesentlichen - neben Zinkoxid (ZnO) und Stearinsäure - ggf. Silan-Kupplungsagenzien für die Anbindung von Kieselsäure an die Polymerketten der enthaltenen Kautschuke, Weichmacher, das Vulkanisationssystem aus Schwefel und/oder Schwefelspendern mit Hilfe von Vulkanisationsbeschleunigern, Ozonschutzmittel, Alterungsschutzmittel, Klebharze, Mastikationshilfsmittel und weitere Aktivatoren bzw. Verarbeitungshilfsmittel, wie z.B. Fettsäuresalze, wie z.B. Zinkseifen und Fettsäureester und deren Derivate, wie z.B. Zinkstearat, oder Zinkkomplexe wie z.B. Zinkethylhexanoat.
Als Silan-Kupplungsagenzien können dabei alle dem Fachmann für die Verwendung in Kautschukmischungen bekannten Silan-Kupplungsagenzien verwendet werden. Hierbei können ein oder mehrere verschiedene Silan-Kupplungsagenzien in Kombination miteinander eingesetzt werden. Die Kautschukmischung kann somit ein Gemisch verschiedener Silane enthalten.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sₓ- (mit x = 2 bis 8).
So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.
Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 261® der Firma Evonik erhältlich, welches z.B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT (z.B. 3-(Octanoylthio)-1-Propyl-Triethoxysilan) in verschiedenen Varianten von der Firma Momentive, USA, oder solche, die unter dem Namen VP Si 363® von der Firma Evonik Industries vertrieben werden.
Ferner ist es denkbar, dass eines der oben genannten Mercaptosilane, insbesondere 3-Mercaptopropyltriethoxysilan, in Kombination mit Verarbeitungshilfsmitteln (die unten aufgeführt sind), insbesondere PEG-Carbonsäureester, eingesetzt werden.
Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Der Mengenanteil der Gesamtmenge an weiteren Zusatzstoffen beträgt 3 bis 150 phr, bevorzugt 3 bis 100 phr und besonders bevorzugt 5 bis 80 phr.
Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze, die nicht zu den oben genannten Klebharzen zählen, oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Vulkanisation der erfindungsgemäßen schwefelvernetzbaren Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.
DipDis (Bis-(Diisopropyl)thiophosphoryldisulfid) und/oder Bis(O,O-2-ethylhexylthiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden.

Ein weiterer Gegenstand der der vorliegenden Erfindung besteht in der Verwendung der beschriebenen schwefelvernetzbaren Kautschukmischung zur Herstellung eines Fahrzeugreifens. Damit ist ein weiterer Gegenstand der Erfindung auch ein Fahrzeugreifen, bei dessen Herstellung wenigstens eine erfindungsgemäße schwefelvernetzbare Kautschukmischung - enthaltend wenigstens ein erfindungsgemäßes Co-Polymer hergestellt mittels wenigstens einem erfindungsgemäßen Verfahren - verwendet wurde.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.
Gemäß einer bevorzugten Ausführungsform der Erfindung handelt es sich um einen Fahrzeugluftreifen.

Hierbei ist die Verwendung in allen Reifenbauteilen prinzipiell denkbar, wie insbesondere dem Laufstreifen und/oder der Seitenwand und/oder in wenigstens einem inneren Bauteil.

Als innere Reifenbauteile werden im Wesentlichen Squeegee, Innenseele (Innenschicht), Kernprofil, Gürtel, Schulter, Gürtelprofil, Karkasse, Wulstverstärker, Wulstprofil, Homprofil und Bandage bezeichnet.
Kautschukmischungen der inneren Reifenbauteile sowie der Seitenwand werden auch als Body-Mischung bezeichnet.
Bevorzugt wird die erfindungsgemäße Kautschukmischung jedoch in Laufstreifen von Fahrzeugreifen verwendet, bevorzugt hierbei wenigstens in der Cap von Laufstreifen mit Cap/Base-Konstruktion.
Laufstreifen tragen in erheblichem Maße zum Rollwiderstand des Fahrzeugreifens bei. Zur Verwendung in Fahrzeugreifen wird die Mischung als Fertigmischung vor der Vulkanisation bevorzugt in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann aber auch in Form eines schmalen Kautschukmischungsstreifens auf einen Reifenrohling aufgewickelt werden. Bei zweigeteilten Laufstreifen (oberer Teil: Cap und unterer Teil: Base) kann die erfindungsgemäße Kautschukmischung sowohl für die Cap als auch für die Base verwendet werden.
Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.
Der Reifenrohling wird anschließend unter im Stand der Technik bekannten Bedingungen vulkanisiert.

Ein weiterer Gegenstand der vorliegenden Erfindung besteht in der Verwendung der beschriebenen schwefelvernetzbaren Kautschukmischung zur Herstellung eines Gurtes, Riemens oder Schlauches. Zur Verwendung der erfindungsgemäßen Kautschukmischung in Riemen, Gurten und Schläuchen, insbesondere in Fördergurten, wird die extrudierte noch unvulkanisierte Mischung in die entsprechende Form gebracht und ggf. dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

## Patentansprüche

1. Verfahren zur Co-Polymerisation von wenigstens einem Monomer der Gruppe A) bestehend aus Dienen mit wenigstens einem Monomer der Gruppe B) ausgewählt aus der Gruppe bestehend aus Alkenen, Vinylacetat, Acrylsäure-Derivaten und Methacrylsäure-Derivaten unter Verwendung wenigstens eines schaltbaren RAFT-Agens aus der Gruppe der N-Methyl-N-(4-Pyridinyl)dithiocarbamate gemäß Formel I): 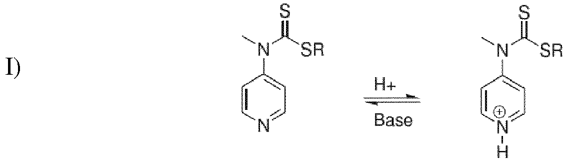
wobei R eine für RAFT-Polymerisation typische R-Gruppe ist, und wobei
H⁺ für ein Proton steht, und wobei
durch Zugabe eines Protonendonors (Säure) die rechts abgebildete Form des Agens erhalten wird und durch Zugabe eines Protonenakzeptors (Base) die linke Form des Agens erhalten wird.

2. Verfahren nach Anspruch 1, **dadurch gekennzeichnet, dass** das Dien ausgewählt ist aus der Gruppe bestehend aus 1,3-Butadien und/oder 2-Methylbuta-1,3-dien und/oder 2,3-Dimethyl-1,3-Butadien und/oder 1,3-Pentadien und/oder 2,4-Hexadien und/oder 1,3-Hexadien und/oder 1,3-Heptadien und/oder 1,3-Octadien und/oder 2-Methyl-2,4-Pentadien und/oder Cyclopentadien und/oder 2,4-Hexadien und/oder 1,3-Cyclooctadien und/oder 2-Chlor-1,3-butadien.

3. Verfahren nach Anspruch 2, **dadurch gekennzeichnet, dass** das Dien ausgewählt ist aus der Gruppe bestehend aus 1,3-Butadien und 2-Methylbuta-1,3-dien (Isopren).

4. Verfahren nach einem der vorherigen Ansprüche, **dadurch gekennzeichnet, dass** das Alken ausgewählt ist aus der Gruppe bestehend aus Ethen und Buten.

5. Verfahren nach einem der der vorherigen Ansprüche, **dadurch gekennzeichnet, dass** das Monomer der Gruppe B) ausgewählt ist aus der Gruppe bestehend aus Ethen und/oder Vinylacetat.

6. Verfahren nach einem der vorherigen Ansprüche, **dadurch gekennzeichnet, dass** die R-Gruppe ausgewählt ist aus der Gruppe enthaltend a) CH₂CN und/oder b) CH(CH₃)C(=O)OCH₃ und/oder c) C(CH₃)₂CN.

7. Co-Polymer **dadurch gekennzeichnet, dass** es durch ein Verfahren gemäß einem der Ansprüche 1 bis 6 hergestellt ist.

8. Schwefelvernetzbare Kautschukmischung **dadurch gekennzeichnet, dass** sie wenigstens ein Co-Polymer nach Anspruch 7 enthält.

9. Verwendung einer schwefelvernetzbaren Kautschukmischung nach Anspruch 8 zur Herstellung eines Fahrzeugreifens.

10. Verwendung einer schwefelvernetzbaren Kautschukmischung nach Anspruch 8 zur Herstellung eines Gurtes, Riemens oder Schlauches.

## Claims

1. Process for copolymerizing at least one monomer from group A) consisting of dienes with at least one monomer from group B) selected from the group consisting of alkenes, vinyl acetate, acrylic acid derivatives and methacrylic acid derivatives using at least one switchable RAFT agent from the group of the N-methyl-N-(4-pyridinyl)dithiocarbamates of formula I): 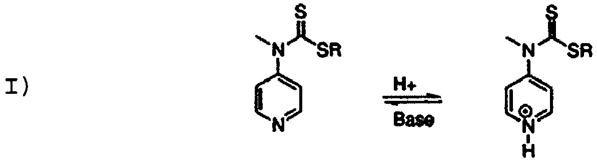
where R is an R group typical of RAFT polymerization,
and where H⁺ is a proton, and where
addition of a proton donor (acid) gives the form of the agent depicted on the right and addition of a proton acceptor (base) gives the left-hand form of the agent.

2. Process according to Claim 1, **characterized in that** the diene is selected from the group consisting of 1,3-butadiene and/or 2-methylbuta-1,3-diene and/or 2,3-dimethyl-1,3-butadiene and/or 1,3-pentadiene and/or 2,4-hexadiene and/or 1,3-hexadiene and/or 1,3-heptadiene and/or 1,3-octadiene and/or 2-methyl-2,4-pentadiene and/or cyclopentadiene and/or 2,4-hexadiene and/or 1,3-cyclooctadiene and/or 2-chloro-1,3-butadiene.

3. Process according to Claim 2, **characterized in that** the diene is selected from the group consisting of 1,3-butadiene and 2-methylbuta-1,3-diene (isoprene).

4. Process according to any of the preceding claims, **characterized in that** the alkene is selected from the group consisting of ethene and butene.

5. Process according to any of the preceding claims, **characterized in that** the monomer from group B) is selected from the group consisting of ethene and/or vinyl acetate.

6. Process according to any of the preceding claims, **characterized in that** the R group is selected from the group comprising a) CH₂CN and/or b) CH(CH₃)C(=O)OCH₃ and/or c) C(CH₃)₂CN.

7. Copolymer, **characterized in that** it has been prepared by a process according to any of Claims 1 to 6.

8. Sulfur-crosslinked rubber mixture, **characterized in that** it comprises at least one copolymer according to Claim 7.

9. Use of a sulfur-crosslinked rubber mixture according to Claim 8 for production of a vehicle tyre.

10. Use of a sulfur-crosslinked rubber mixture according to Claim 8 for production of a cord, belt or hose.

## Revendications

1. Procédé de copolymérisation d'au moins un monomère du groupe A) constitué par les diènes avec au moins un monomère du groupe B) choisi dans le groupe constitué par les alcènes, l'acétate de vinyle, les dérivés de l'acide acrylique et les dérivés de l'acide méthacrylique en utilisant au moins un agent RAFT temporaire du groupe constitué par les N-méthyl-N-(4-pyridinyl)dithiocarbamates selon la formule I) : 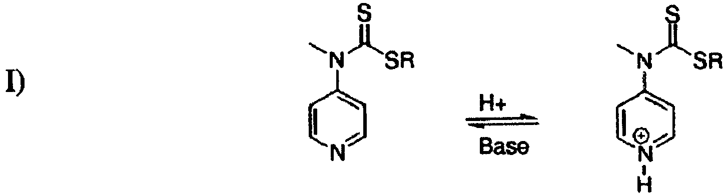
dans laquelle R est un groupe R type pour la polymérisation RAFT, et
H⁺ représente un proton,
la forme représentée à droite de l'agent étant obtenue par ajout d'un donneur de protons (acide), et la forme de gauche de l'agent étant obtenue par ajout d'un accepteur de protons (base).

2. Procédé selon la revendication 1, **caractérisé en ce que** le diène est choisi dans le groupe constitué par le 1,3-butadiène et/ou le 2-méthylbuta-1,3-diène et/ou le 2,3-diméthyl-1,3-butadiène et/ou le 1,3-pentadiène et/ou le 2,4-hexadiène et/ou le 1,3-hexadiène et/ou le 1,3-heptadiène et/ou le 1,3-octadiène et/ou le 2-méthyl-2,4-pentadiène et/ou le cyclopentadiène et/ou le 2,4-hexadiène et/ou le 1,3-cyclooctadiène et/ou le 2-chloro-1,3-butadiène.

3. Procédé selon la revendication 2, **caractérisé en ce que** le diène est choisi dans le groupe constitué par le 1,3-butadiène et le 2-méthylbuta-1,3-diène (isoprène).

4. Procédé selon l'une quelconque des revendications précédentes, **caractérisé en ce que** l'alcène est choisi dans le groupe constitué par l'éthène et le butène.

5. Procédé selon l'une quelconque des revendications précédentes, **caractérisé en ce que** le monomère du groupe B) est choisi dans le groupe constitué par l'éthène et/ou l'acétate de vinyle.

6. Procédé selon l'une quelconque des revendications précédentes, **caractérisé en ce que** le groupe R est choisi dans le groupe contenant a) CH₂CN et/ou b) CH(CH₃)C(=O)OCH₃ et/ou c) C(CH₃)₂CN.

7. Copolymère, **caractérisé en ce qu'**il est fabriqué par un procédé selon l'une quelconque des revendications 1 à 6.

8. Mélange de caoutchouc réticulable au soufre, **caractérisé en ce qu'**il contient au moins un copolymère selon la revendication 7.

9. Utilisation d'un mélange de caoutchouc réticulable au soufre selon la revendication 8 pour la fabrication d'un pneu de véhicule.

10. Utilisation d'un mélange de caoutchouc réticulable au soufre selon la revendication 8 pour la fabrication d'une sangle, d'une courroie ou d'un tuyau.
